# EUROPEAN PATENT APPLICATION

(11) **EP 4 761 042 A1**
(43) Date of publication of application: **17.06.2026**
(21) Application number: 24939818.1
(22) Date of filing: 13.12.2024
(51) Int. Cl.: H02J 7/00, H01M 10/48, H01M 10/44

(54) **BATTERY CHARGING CONTROL APPARATUS AND METHOD, AND BATTERY SYSTEM AND CHARGING APPARATUS INCLUDING SAME**

(30) Priority: 22.05.2024 KR 20240066385; 12.12.2024 KR 20240184332
(71) Applicant: LG Energy Solution, Ltd., Seoul 07335 (KR)
(72) Inventor: CHO, Hyo Seok, Daejeon 34122 (KR)
(74) Representative: Plasseraud IP
(86) International application number: PCT/KR2024/096894
(87) International publication number: WO 2025/244235

(57) **Abstract**

The present invention relates to a battery charging control apparatus and method, and a battery system and a charging apparatus including same, wherein the battery charging control apparatus includes the commands of: obtaining temperature information of a battery system; and during charging of a battery via a charging apparatus, controlling a charging current of the battery on the basis of the temperature information of the battery system, and the battery system may include a battery management apparatus that, during charging of the battery via the charging apparatus, receives temperature information from a second temperature sensor located in the charging apparatus, and controls a charging current of the battery on the basis of temperature information received from at least one of a first temperature sensor and the second temperature sensor.

## Description

### [Technical Field]

This application claims priority to and the benefit of Korean Patent Application No.10-2024-0066385filed in the Korean Intellectual Property Office on May 22,2024 and Korean Patent Application No.10-2024-0184332filed in the Korean Intellectual Property Office on December 12,2024 the entire contents of which are incorporated herein by reference.

The present invention relates to a battery charge control apparatus and method, a battery system and charging device including the same, and more particularly, to an apparatus and method for controlling battery charging, a battery system and charging device including the same.

### [Background Art]

As depletion of fossil fuels proceeds and interest in environmental pollution increases, a demand for secondary batteries as an eco-friendly alternative energy source is rapidly increasing. Among various alternative energy sources, a demand for rechargeable lithium secondary batteries is rapidly increasing.

Secondary batteries are being applied to various industrial fields from mobile application devices to transportation means, robots and energy storage devices, as a response to environmental regulations and high oil price issues.

In general, batteries applied to transportations are provided with unit battery cells connected in series for high output. Accordingly, the batteries applied to transportations have a high risk of fire due to overheating during charging processes because amount of charge current is considerably high. In addition, a battery applied to transportations may confront fire due to thermal runaway phenomenon caused by shock to the battery from a road surface or abnormality in the battery from overcharging.

Accordingly, it used to determine whether a fire in a battery occurred based on real time measurement of internal temperature change of a battery management device according to a temperature sensor provided in the battery management device.

However, this type of a conventional fire occurrence diagnosis device has a disadvantage in that the measurement reliability may be reduced when the temperature sensor inside the battery management device fails or temperature of the surrounding environment changes significantly in a short period of time.

### [Detailed Description of the Invention]

### [Technical Problem]

To obviate one or more problems of the related art, embodiments of the present disclosure provide a battery charge control apparatus that determines occurrence of an abnormality based on temperature change of the battery and a device and prevents a fire occurring during battery charging in advance.

To obviate one or more problems of the related art, embodiments of the present disclosure also provide a battery charge control method that determines occurrence of an abnormality based on temperature change of the battery and a device and prevents a fire occurring during battery charging in advance.

To obviate one or more problems of the related art, embodiments of the present disclosure also provide a battery system that that determines occurrence of an abnormality based on temperature change of the battery and a device and prevents a fire occurring during battery charging in advance.

To obviate one or more problems of the related art, embodiments of the present disclosure also provide a charging device that determines occurrence of an abnormality based on temperature change of the battery and a device and prevents a fire occurring during battery charging in advance.

### [Technical Solution]

I n order to achieve the objective of the present disclosure, a battery charge control apparatus may include at least one processor; and a memory configured to store at least one instruction executed by the at least one processor, and the at least one instruction may include an instruction to obtain temperature information of a battery system; and an instruction to control a charge current of a battery in the battery system based on the temperature information of the battery system when charging the battery by a charging device.

Here, the temperature information of the battery system may be obtained from at least one of a first temperature sensor configured to measure a temperature of the battery; and a second temperature sensor located at an outer side of the charging device and configured to measure an external temperature of a device to which the battery is applied.

Here, the second temperature sensor may include a thermal imaging camera installed on an outer side of the charging device.

Meanwhile, the instruction to control the charge current may include an instruction to determine that an abnormality has occurred in the battery when the temperature of the battery is equal to or higher than a first battery temperature set value or when an external temperature of the device to which the battery is applied is equal to or higher than an external temperature set value; and an instruction to cut off the charge current supplied to the battery when it is determined that an abnormality has occurred in the battery.

In addition, the instruction to control the charge current may include an instruction to determine that a sign of abnormality has occurred in the battery when the temperature of the battery is equal to or higher than a second battery temperature set value which is lower than the first battery temperature set value and the external temperature of the device to which the battery is applied is lower than the external temperature set value; and an instruction to adjust downward the size of the charge current supplied to the battery when a sign of abnormality has occurred in the battery.

Moreover, the instruction to control the charge current may include an instruction to identify a charging method of the battery when the temperature of the battery is equal to or higher than a second battery temperature set value, which is lower than a first battery temperature set value and the external temperature of the device to which the battery is applied is lower than the external temperature set value; and an instruction to change the charging method of the battery from a constant current (CC) charging method to a constant voltage (CV) charging method when the charging method of the battery is constant current charging (CC charging), and to charge the battery.

In addition, the instruction to control the charge current may include an instruction to determine that an abnormality has occurred in the battery when a temperature change value of the battery calculated for each predetermined time period is equal to or higher than a first temperature change set value; and an instruction to cut off the charge current supplied to the battery when it is determined that an abnormality has occurred in the battery.

In addition, the instruction to control the charge current may include an instruction to determine that an abnormality has occurred in the battery when a temperature change value of the battery is continuously maintained above the second temperature change set value for a predetermined time; and an instruction to cut off the charge current supplied to the battery when it is determined that an abnormality has occurred in the battery.

Meanwhile, the instruction to control the charge current may include an instruction to determine that an abnormality has occurred in the charging device when the temperature of the battery is below a second battery temperature set value and the external temperature of the device to which the battery is applied is above the external temperature set value.

Here, the instruction to determine that an abnormality has occurred in the charging device may include an instruction to receive an internal temperature of the charging device measured from a third temperature sensor located inside the charging device; and an instruction to determine that an abnormality has occurred in the charging device if the internal temperature of the charging device is equal to or higher than the internal temperature set value.

M eanwhile, the at least one instruction may further include an instruction to transmit a diagnosis result of the battery generated based on temperature information of the battery system to at least one of the device to which the battery is applied and a user terminal for the device to which the battery is applied.

A ccording to another embodiment of the present disclosure, a charge control method of a battery charge control apparatus may include obtaining temperature information of a battery system; and controlling a charge current of a battery in the battery system based on the temperature information of the battery system when charging the battery by a charging device.

The obtaining temperature information of the battery system may include receiving a temperature of the battery from a first temperature sensor; and receiving an external temperature of a device to which the battery is applied from a second temperature sensor located at an outer side of the charging device.

The second temperature sensor may include a thermal imaging camera installed on an outer side of the charging device.

The controlling the charge current of the battery may include determining that an abnormality has occurred in the battery when the temperature of the battery is equal to or higher than a first battery temperature set value or when an external temperature of the device to which the battery is applied is equal to or higher than an external temperature set value; and cutting off the charge current supplied to the battery when it is determined that an abnormality has occurred in the battery.

The controlling the charge current of the battery may include determining that a sign of abnormality has occurred in the battery when the temperature of the battery is equal to or higher than a second battery temperature set value which is lower than the first battery temperature set value and the external temperature of the device to which the battery is applied is lower than the external temperature set value; and adjusting downward the size of the charge current supplied to the battery when a sign of abnormality has occurred in the battery.

The controlling the charge current of the battery may include identifying a charging method of the battery when the temperature of the battery is equal to or higher than a second battery temperature set value, which is lower than a first battery temperature set value and the external temperature of the device to which the battery is applied is lower than the external temperature set value; and changing the charging method of the battery from a constant current (CC) charging method to a constant voltage (CV)charging method when the charging method of the battery is constant current charging (CC charging), and to charge the battery.

The controlling the charge current of the battery may include determining that an abnormality has occurred in the battery when a temperature change value of the battery calculated for each predetermined time period is equal to or higher than a first temperature change set value; and cutting off the charge current supplied to the battery when it is determined that an abnormality has occurred in the battery.

The controlling the charge current of the battery may include determining that an abnormality has occurred in the battery when a temperature change value of the battery is continuously maintained above the second temperature change set value for a predetermined time; and cutting off the charge current supplied to the battery when it is determined that an abnormality has occurred in the battery.

The controlling the charge current of the battery may include determining that an abnormality has occurred in the charging device when the temperature of the battery is below a second battery temperature set value and the external temperature of the device to which the battery is applied is above the external temperature set value.

The determining that an abnormality has occurred in the charging device may include receive an internal temperature of the charging device measured from a third temperature sensor located inside the charging device; and determining that an abnormality has occurred in the charging device if the internal temperature of the charging device is equal to or higher than the internal temperature set value.

The method may further include transmitting a diagnosis result of the battery generated based on temperature information of the battery system to at least one of the device to which the battery is applied and a user terminal for the device to which the battery is applied.

According to another embodiment of the present disclosure, a battery system may include a battery; a battery management device for managing the battery; and a first temperature sensor configured to measure a temperature of the battery, wherein the battery management device is configured to, when charging the battery by a charging device, receive temperature information from a second temperature sensor located at an outer side of the charging device and to control a charge current of the battery based on temperature information received from at least one of the first temperature sensor and the second temperature sensor.

The second temperature sensor may measure external temperature of a device to which the battery is applied.

According to another embodiment of the present disclosure, a charging device may include a battery charge control unit for controlling battery charging; and a temperature sensor configured to measure an external temperature of a device to which a battery is applied during battery charging, wherein the battery charge control unit is configured to, when charging the battery by the charging device, receive temperature information from a battery management device and to control a charge current of the battery based on temperature information received from at least one of the temperature sensor and the battery management device.

The temperature sensor may include a thermal imaging camera installed on an outer side of the charging device.

### [Advantageous Effects]

A battery charge control apparatus according to embodiments of the present invention is applied to a battery system or a charger, acquires the temperature of the battery and the temperature of a device to which the battery is applied, which are measured during the charging process of the battery, and, based on the temperature of the battery, determines whether an abnormality has occurred in the battery and controls the charge current supplied to the battery, thereby preventing the occurrence of a battery fire and enabling safe and reliable battery operation.

### [Brief Description of the Drawings]

FIG.1 is a block diagram of a battery system to which embodiments of the present invention may be applied.
FIG. 2 is a block diagram for explaining power charging of a device including a battery system according to embodiments of the present invention.
FIG. 3 is a block diagram of a battery system according to an embodiment of the present invention.
FIG. 4 is a block diagram of a charging device according to another embodiment of the present invention.
FIG. 5 is an image photographed by a second temperature sensor according to the embodiment of the present invention.
FIG. 6 is a block diagram of a battery charge control apparatus according to embodiments of the present invention.
FIG. 7 is a flowchart of a battery charge control method according to embodiments of the present invention.
FIG. 8 is a flowchart for explaining a step of determining whether the battery is abnormal in a battery charge control method according to an embodiment of the present invention.
FIG. 9 is a flowchart for explaining a step of determining whether an abnormality occurs in a charging device in a battery charge control method according to an embodiment of the present invention.
FIG. 10 is a flowchart of a battery charge control method according to another embodiment of the present invention.

S: battery system
C: charging device
D: device
310: battery
320: battery management device
330: first temperature sensor
340, 600: battery charge control apparatus
410: connector
420: second temperature sensor
430: third temperature sensor
440: input unit
450: output unit
460: battery charge control unit
610: processor
620: memory
630: transceiver
640: input interface device
650: output interface device
660: storage device
670: bus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

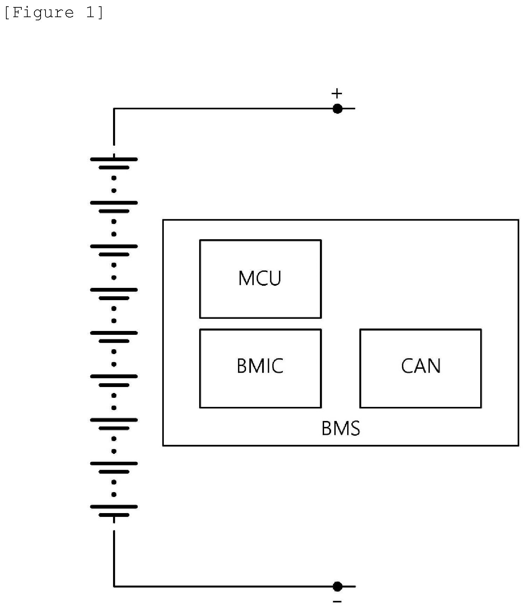

FIG.1 is a block diagram of a battery system to which embodiments of the present invention may be applied.

Referring to FIG. 1, a battery pack or battery module may include a plurality of battery cells connected in series. The battery pack or module may be connected to a load through a positive terminal and a negative terminal to perform charging or discharging. The most commonly used battery cell is a lithium-ion (Li-Ion) battery cell.

A battery management system (BMS) 100 may be connected to a battery module or battery pack.

The battery management system may monitor a current, a voltage and a temperature of each battery cell or module (pack) to be managed, calculate state of charge (SOC) of the battery based on monitoring results to control charging and discharging. Here, the State of Charge (SOC) refers to a current state of charge of a battery, represented in percent points [%], and the State of Health (SOH) may be a current condition of a battery compared to its ideal conditions, represented in percent points [%].

The BMS may monitor battery cells, read cell voltages, and transmit them to other systems connected to the battery.

Furthermore, the battery management system monitors at least one electrical component constituting the battery system and passes their status data on to other systems. For this, the BMS includes a communication module for communicating with other systems in a device including the battery system.

The communication module of the BMS may communicate with other systems in the device using Controller Area Network (CAN). Here, components, modules or systems in the BMS are connected to each other through a CAN bus. Accordingly, the battery management system (BMS) may use CAN communication to remotely transmit status data obtained through monitoring of the battery pack or module and at least one electrical component constituting the battery management system (BMS) to other systems.

Meanwhile, the battery management system (BMS) may equally balance charges of the battery cells in order to extend the life of the battery system.

The battery management system (BMS) may include various components such as a fuse, a current sensing element, a thermistor, a switch, and a balancer to perform such operations. In most cases, a micro controller unit (MCU) or a battery monitoring integrated chip (BMIC) for interworking and controlling these components is additionally included in the BMS.

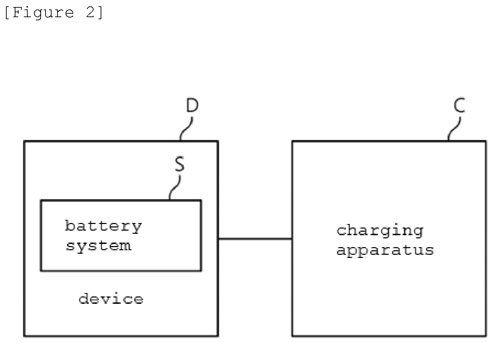

FIG. 2 is a block diagram for explaining power charging of a device including a battery system according to embodiments of the present invention.

Referring to FIG. 2, the battery system S may be applied to a device D driven by a battery. In other words, the battery system S may be applied to a device D that uses a battery as a power source. According to an embodiment, the device D may include a means of transportation. For example, the device D may be an electric vehicle, an electric scooter, or an electric bicycle.

The battery system S may be electrically connected to a charging device C. Accordingly, the charging device C may charge a battery inside the battery system S. According to an embodiment, the battery system S may be electrically connected by a connector included in the charging device C.

In addition, the battery system S may be communicatively connected to the charging device C. According to embodiments, the battery system S may transmit and receive at least one communication signal to/from the charging device C through wired or wireless communication. For example, the battery system S may be connected to a connector of the charging device C and may perform wired communication with the charging device C.

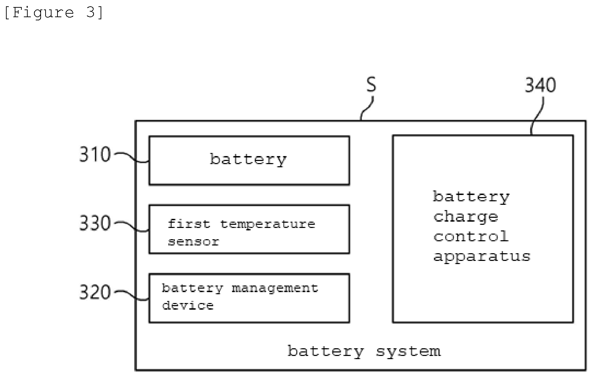

FIG. 3 is a block diagram of a battery system according to an embodiment of the present invention.

Referring to FIG. 3, the battery system S may include a battery 310, a battery management device 320, and a first temperature sensor 330. In addition, the battery system S may further include a battery charge control apparatus 340.

The battery 310 may be provided in the form of at least one battery cell connected in series/parallel. For example, the battery 310 may be provided in the form of a battery assembly. Here, the battery assembly may mean an assembly that includes a plurality of electrically connected battery cells and is applied to a specific system or device to function as a power supply source. For example, a battery assembly may mean a battery module, a battery pack, or a battery rack, but the scope of the present invention is not limited to these entities. In addition, depending on a device or system in which the battery is used, a battery module may also be referred to as a battery bank. According to embodiments, the battery 310 may be a battery module or a battery pack.

The battery management device 320 may manage and control the battery 310. According to embodiments, the battery management device 320 may receive at least one control signal from a battery charge control apparatus 340 to be described later and control charging of the battery 310 according to the control signal.

The first temperature sensor 330 may be located around the battery 310 and may measure the temperature of the battery 310. According to an embodiment, the first temperature sensor 330 is positioned close to the battery 310 and may measure real-time temperatures of the battery 310.

The first temperature sensor 330 may transmit a measured temperature of at least one battery 310 to the battery charge control apparatus 340 in response to a request of the battery charge control apparatus 340. Accordingly, the battery charge control apparatus, which will be described later, may determine whether the battery 310 is abnormal based on the temperature of the battery 310.

The battery charge control apparatus 340 may control charge current supplied to the battery 310 according to temperature information of the battery system S when charging the battery 310. The battery charge control apparatus 340, as shown in FIG. 3, is positioned inside the battery system S and may control a size of the charge current supplied from the charging device C or block supply of the charge current.

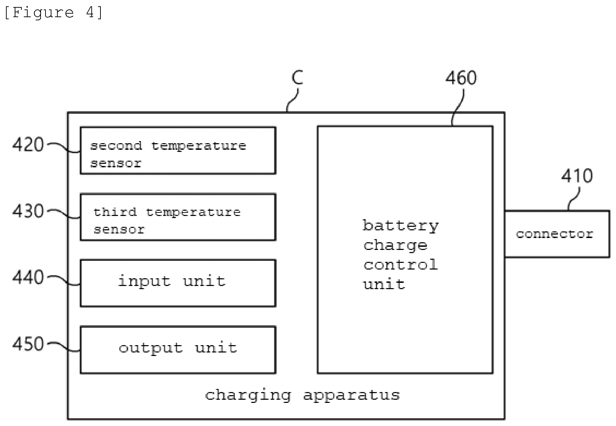

However, without being limited to what has been disclosed, the battery charge control apparatus 340 may be provided inside the charging device C, not in the battery system S, such as the battery charge control unit 460 shown in FIG. 4, to control the size of the charge current supplied to the battery 310 or to stop the supply of the charge current.

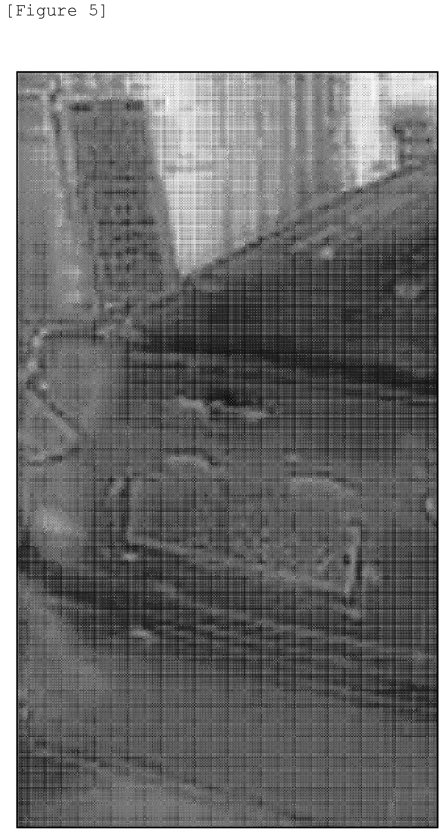

FIG. 4 is a block diagram of a charging device according to another embodiment of the present invention and FIG. 5 is an image photographed by a second temperature sensor according to the embodiment of the present invention.

Referring to FIG. 4, the charging device C may include a connector 410, a second temperature sensor 420, a third temperature sensor 430, an input unit 440, and an output unit 450. In addition, the charging device C may further include a battery charge control unit 460.

The connector 410 may have one end connected to the charging device C and the other end connected to the battery system S inside the device D to which the battery system is applied. Accordingly, the connector 410 may transfer charge current supplied from the charging device C to the battery 310 through the battery system S. In other words, the charging device C may charge the battery 310 by supplying the charge current to the battery system S through the connector 410.

The second temperature sensor 420 may be located on an outer side of the charging device C. According to an embodiment, the second temperature sensor 420 may be activated when the battery 310 is being charged to measure temperature of an external area of the device D including the battery 310. Here, the external area may include, an area including a point where the battery 310 is located inside the device D, and may include a point where the battery 310 is located and a surrounding area of the point. For example, the second temperature sensor 420 may be provided as a thermal imaging camera, as shown in FIG. 5.

According to an embodiment, the second temperature sensor 420 may transmit information on measured temperature of at least one battery 310 to the battery charge control apparatus 340 in accordance with a request of the battery charge control apparatus 340 in the battery system S.

According to another embodiment, the second temperature sensor 420 may transmit information on measured temperature of at least one battery 310 to the battery charge control unit 460 described below. Accordingly, the battery charge control unit 460 may determine the size of the charge current to be supplied to the battery 310 based on the temperature information.

The third temperature sensor 430 may be located inside the charging device C. Accordingly, the third temperature sensor 430 may measure internal temperature of the charging device.

The input unit 440 may be located on the outer surface of the charging device C and may receive at least one piece of user information from the user. For example, the input unit 440 may be provided as a keypad or a camera and may receive user terminal information, vehicle information, payment information, etc. from the user.

The output unit 450 may be located on the outer surface of the charging device C and may provide at least one status information of the charging device C to a supplier or a user. For example, the output unit 450 may be provided as a display device and may output and provide information on charging progress status of the charging device C, diagnostic information according to whether an abnormality has occurred, etc. to the supplier or the user. However, without being limited to what has been disclosed, the charging device C may transmit at least one piece of status information to a user terminal or a supplier terminal instead of the output unit 450.

The battery charge control unit 460 may be provided inside the charging device C and may control the size of charge current supplied to the battery 310 when charging the battery 310 or stop the supply of the charge current.

However, without being limited to what has been disclosed, like the battery charge control apparatus (350) of FIG. 3, it may be provided inside the battery system S rather than the charging device C. In other words, the battery charge control apparatus (350) and the battery charge control unit 460 may be provided with the same configuration in at least one of the battery system S and the charging device C.

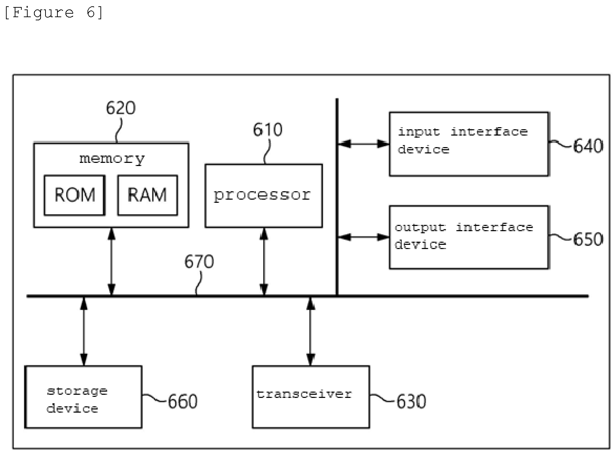

Hereinafter, in FIG. 6, the configuration of the battery charge control apparatus 350 and the battery charge control unit 460 will be collectively referred to as a battery charge control apparatus 600 and will be described in more detail.

FIG. 6 is a block diagram of a battery charge control apparatus according to embodiments of the present invention.

Referring to FIG. 6, the battery charge control apparatus 600 may obtain temperature information of the battery system S when charging the battery 310 included in the device D. Thereafter, the battery charge control apparatus 600 may control the charge current of the battery 310 based on the temperature information of the battery system S.

According to embodiments, the temperature information of the battery system S may include temperature of the battery 310 and external temperature of the device D.

More specifically, the battery charge control apparatus 600 may receive the temperature of the battery 310 transmitted from the first temperature sensor 330 in the battery system S when charging the battery 310.

In addition, the battery charge control apparatus 600 may receive the external temperature of the device D transmitted from the second temperature sensor 420 outside the charging device C when charging the battery 310.

Thereafter, the battery charge control apparatus 600 may control the size of the charge current supplied to the battery 310 based on the temperature of the battery 310 and the temperature of the device D.

According to an embodiment, the battery charge control apparatus 600 may be included in the battery system S, as in FIG. 3. Accordingly, the battery charge control apparatus 600 may determine the size of the charge current supplied from the charging device C by considering the temperature of the battery 310 and the external temperature of the device D. Thereafter, the battery charge control apparatus 600 may transmit information on the size of the determined charge current to the battery management device 320. Accordingly, the battery charge control apparatus 600 may control the battery management device 320 to supply the charge current to the battery 310 by the determined size.

According to another embodiment, the battery charge control apparatus 600 may be included in the charging device C, as in FIG. 4. Accordingly, the battery charge control apparatus 600 may determine the size of charge current to be supplied from the charging device C by considering the temperature of the battery 310 and the external temperature of the device D. Thereafter, the battery charge control apparatus 600 may supply charge current to the battery 310 by the size of the determined charge current. Accordingly, the battery 310 may be charged by the size of charge current determined by the battery charge control apparatus 600. Thus, the battery charge control apparatus 600 may diagnose status of the battery 310 by considering the temperature of the battery 310 and the temperature of the device D and control the size of the charge current based on the diagnosis, thereby preventing a fire occurring during battery charging processes in advance.

To describe the hardware configuration of the battery charge control apparatus 600 in more detail, the battery charge control apparatus 600 may include a memory 610, a processor 620, a transceiver 630, an input interface device 640, an output interface device 650, and a storage device 660.

According to embodiments, respective components 610, 620, 630, 640, 650, 660 included in the battery charge control apparatus 600 may be connected by a bus 670 to communicate with each other.

The memory 610 and the storage device 600 among the components 610, 620, 630, 640, 650, 660 may include at least one of a volatile storage medium and a non-volatile storage medium. For example, the memory 610 and the storage device 660 may include at least one of read only memory (ROM) and random access memory (RAM).

Among them, the memory 610 may include at least one instruction executed by the processor 620.

A ccording to embodiments, the at least one instruction may include an instruction to obtain temperature information of a battery system; and an instruction to control a charge current of a battery in the battery system based on the temperature information of the battery system when charging the battery by a charging device.

Here, the temperature information of the battery system may be obtained from at least one of a first temperature sensor configured to measure a temperature of the battery; and a second temperature sensor located at an outer side of the charging device and configured to measure an external temperature of a device to which the battery is applied.

Here, the second temperature sensor may include a thermal imaging camera installed on an outer side of the charging device.

Meanwhile, the instruction to control the charge current may include an instruction to determine that an abnormality has occurred in the battery when the temperature of the battery is equal to or higher than a first battery temperature set value or when an external temperature of the device to which the battery is applied is equal to or higher than an external temperature set value; and an instruction to cut off the charge current supplied to the battery when it is determined that an abnormality has occurred in the battery.

In addition, the instruction to control the charge current may include an instruction to determine that a sign of abnormality has occurred in the battery when the temperature of the battery is equal to or higher than a second battery temperature set value which is lower than the first battery temperature set value and the external temperature of the device to which the battery is applied is lower than the external temperature set value; and an instruction to adjust downward the size of the charge current supplied to the battery when a sign of abnormality has occurred in the battery.

Moreover, the instruction to control the charge current may include an instruction to identify a charging method of the battery when the temperature of the battery is equal to or higher than a second battery temperature set value, which is lower than a first battery temperature set value and the external temperature of the device to which the battery is applied is lower than the external temperature set value; and an instruction to change the charging method of the battery from a constant current (CC) charging method to a constant voltage (CV) charging method when the charging method of the battery is constant current charging (CC charging), and to charge the battery.

In addition, the instruction to control the charge current may include an instruction to determine that an abnormality has occurred in the battery when a temperature change value of the battery calculated for each predetermined time period is equal to or higher than a first temperature change set value; and an instruction to cut off the charge current supplied to the battery when it is determined that an abnormality has occurred in the battery.

In addition, the instruction to control the charge current may include an instruction to determine that an abnormality has occurred in the battery when a temperature change value of the battery is continuously maintained above the second temperature change set value for a predetermined time; and an instruction to cut off the charge current supplied to the battery when it is determined that an abnormality has occurred in the battery.

Meanwhile, the instruction to control the charge current may include an instruction to determine that an abnormality has occurred in the charging device when the temperature of the battery is below a second battery temperature set value and the external temperature of the device to which the battery is applied is above the external temperature set value.

The instruction to determine that an abnormality has occurred in the charging device may include an instruction to receive an internal temperature of the charging device measured from a third temperature sensor located inside the charging device; and an instruction to determine that an abnormality has occurred in the charging device if the internal temperature of the charging device is equal to or higher than the internal temperature set value.

The at least one instruction may further include an instruction to transmit a diagnosis result of the battery generated based on temperature information of the battery system to at least one of the device to which the battery is applied and a user terminal for the device to which the battery is applied.

The processor 620 may mean a central processing unit (CPU), a graphics processing unit (GPU), or a dedicated processor on which methods according to embodiments of the present invention are performed.

The processor 620 may execute at least one program command stored in the memory 610 as described above.

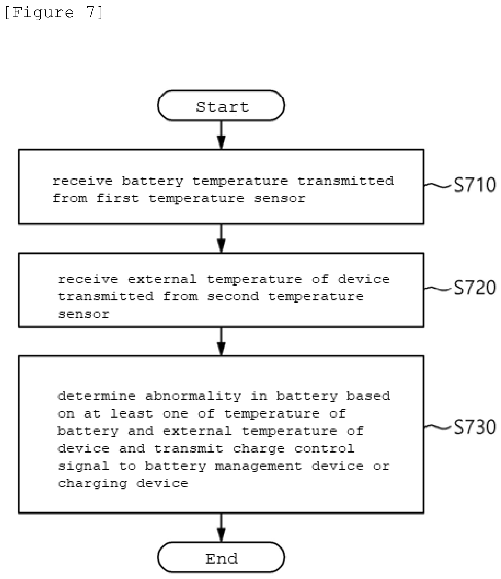

FIG. 7 is a flowchart of a battery charge control method according to embodiments of the present invention.

Referring to FIG. 7, the processor 620 in a battery charge control apparatus 600 may obtain temperature information of a battery system S when charging the battery 310.

According to one embodiment, the processor 620 may receive temperature of the battery 310 transmitted from a first temperature sensor 330 in the battery system S (S710). Thereafter, the processor 620 may store the temperature of the battery 310 received from the first temperature sensor 330 in a separate storage device 660.

According to another embodiment, the processor 620 may receive an external temperature of a device D in the battery system S transmitted from a second temperature sensor 420 outside the charging device C (S720). Thereafter, the processor 620 may store the external temperature of the device D received from the second temperature sensor 420 in a separate storage device 660.

Thereafter, the processor 620 may determine whether an abnormality occurs in the battery 310 based on the temperature information of the battery system S stored in the storage device 660. In other words, the processor 620 may determine whether an abnormality occurs in the battery 310 based on at least one of a temperature of the battery 310 and an external temperature of the device D.

Thereafter, the processor 620 may transmit a charge control signal according to whether an abnormality occurs in the battery 310 to either the battery management device 320 in the battery system S or the charging device C depending on the location where the battery charge control apparatus 600 is provided (S730). Thereafter, the battery management device 320 or the charging device C may control the charge current of the battery 310 according to the charge control signal received from the processor 620 in the battery charge control apparatus 600.

According to an embodiment, when the battery charge control apparatus 600 is present in the battery system S (corresponding to the configuration 340 of FIG. 3), if it is determined that an abnormality has occurred in the battery 310, the processor 620 may transmit a signal to block supply of charge current to the battery management device 320. Accordingly, the battery management device 320 may block the charge current supplied to the battery 310 by blocking inflow path of the charge current between the charging device C and the battery 310.

Meanwhile, when the battery charge control apparatus 600 is present in the charging device C (corresponding to the configuration 460 of FIG. 4), if it is determined that an abnormality has occurred in the battery 310, the processor 620 may transmit a signal to cut off supply of charge current to the charging device C. Accordingly, the charging device C may stop the supply of charge current to the battery 310.

According to another embodiment, when the battery charge control apparatus 600 is present in the battery system S (corresponding to the configuration 340 of FIG. 3), if it is determined that a sign of abnormality has occurred in the battery 310, the processor 620 may transmit a signal to change the charging method or a signal to adjust the size of the charge current to the battery management device 320. Accordingly, the battery management device 320 may change the charging method of the battery 310 or adjust downward the size of charge current supplied from the charging device C to the battery 310.

Meanwhile, when the battery charge control apparatus 600 is present in the charging device C (corresponding to the configuration 460 of FIG. 4), if it is determined that a sign of abnormality has occurred in the battery 310, the processor 620 may transmit a signal for changing the charging method to the battery management device 320 or transmit a signal for adjusting the size of charge current to the charging device C. Accordingly, the charging method of the battery 310 may be changed by the battery management device 320 or the size of the charge current may be adjusted downward by the charging device C and supplied to the battery 310.

According to another embodiment, if it is determined that no abnormality has occurred in the battery 310, the processor 620 may continuously monitor the temperature of the battery 310 and the external temperature of the device D without control of the charge current of the battery 310.

Meanwhile, the processor 620 may transmit a result of determination whether an abnormality has occurred in the battery 310 to a user terminal or the device D.

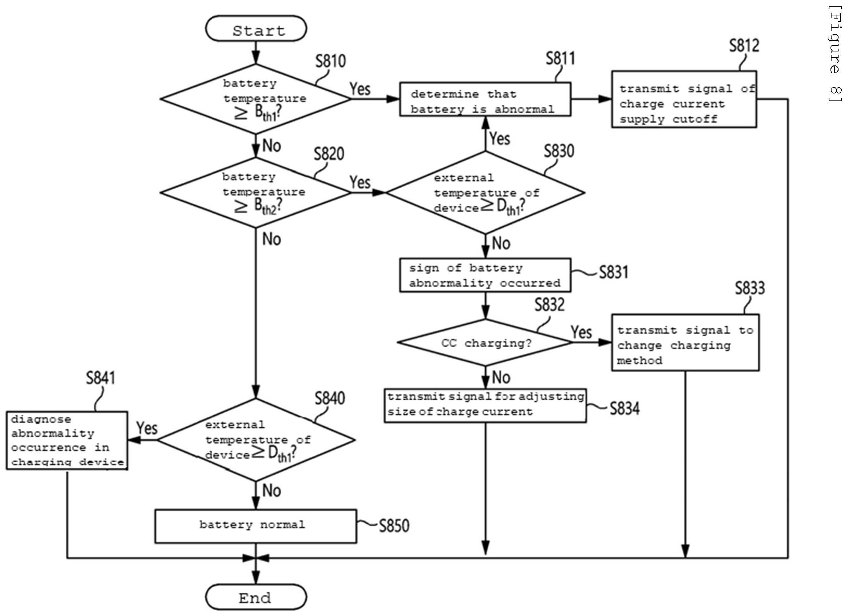

FIG. 8 is a flowchart for explaining a step of determining whether the battery is abnormal in a battery charge control method according to an embodiment of the present invention.

Referring to FIG. 8, the processor 620 may compare the temperature of the battery 310 with a predefined first battery temperature set value Bₜₕ₁ (S810). Here, the first battery temperature set value Bₜₕ₁ may be a predefined set value based on a C-rate of the battery 310. According to an embodiment, the first battery temperature set value Bₜₕ₁ may be stored in advance in the storage device 660.

According to an embodiment, if the temperature of the battery is higher than or equal to the predefined first battery temperature set value (Yes in S810), the processor 620 may determine that the battery is abnormal (S811). Accordingly, the processor 620 may transmit a signal of supply cutoff of the charge current to the battery management device 320 or the charging device C (S812) to cut off the charge current supplied to the battery 310.

According to another embodiment, if the temperature of the battery is lower than the predefined first battery temperature set value (No of S810), the processor 620 may compare the temperature of the battery 310 with a predefined second battery temperature set value Bₜₕ₂ (S820).

Here, the second battery temperature set value Bₜₕ₂ may be a predefined set value based on the C-rate of the battery 310. According to an embodiment, the second battery temperature set value Bₜₕ₂ may be stored in advance in the storage device 660. Here, the second battery temperature set value Bₜₕ₂ may be a lower temperature than the first battery temperature set value Bₜₕ₁.

The processor 620 may compare the external temperature of the device D with the external temperature set value Dₜₕ₁ (S830) when the temperature of the battery 310 is equal to or higher than the second battery temperature set value Bₜₕ₂ (Yes in S820). For example, the external temperature set value Dₜₕ₁ may be a predefined set value based on the C-rate of the battery 310. According to an embodiment, the external temperature set value Dₜₕ₁ may be provided in advance by being stored in the storage device 660.

Here, when the external temperature of the device D is equal to or higher than the external temperature set value Dₜₕ₁ (Yes in S830), the processor 620 may determine that an abnormality has occurred in the battery 310, as in step S811. Accordingly, the processor 620 may transmit a signal to cut off the supply of charge current to the battery management device 320 or the charging device C, as in step S812, to cut off the charge current supplied to the battery 310.

Meanwhile, if the external temperature of the device D is lower than the external temperature set value Dₜₕ₁(No in S830), the processor 620 may determine that a sign of abnormality has occurred in the battery 310 (S831) and may check the charging method of the battery 310.

According to one embodiment, if the charging method of the battery 310 is constant-current charging (CC charging) (Yes in S832), the processor 620 may transmit a signal to change the charging method of the battery 310 to the battery management device 320 or the charging device C (S833). Accordingly, the charging method of the battery 310 may be changed from a constant current charging (CC charging) to a constant voltage charging (CV charging) method.

According to another embodiment, if the charging method of the battery is a constant voltage charging (CV charging) method (No in S832), the processor 620 may transmit a signal for adjusting the size of charge current to the battery management device 320 or the charging device C (S834). Accordingly, the size of charge current supplied to the battery 310 may be adjusted downward to a predetermined size.

Meanwhile, if the temperature of the battery 310 is lower than a predefined second battery temperature set value Bₜₕ₂ (No in S820), the processor 620 may compare the external temperature of the device D with the external temperature set value Dₜₕ₁ (S840).

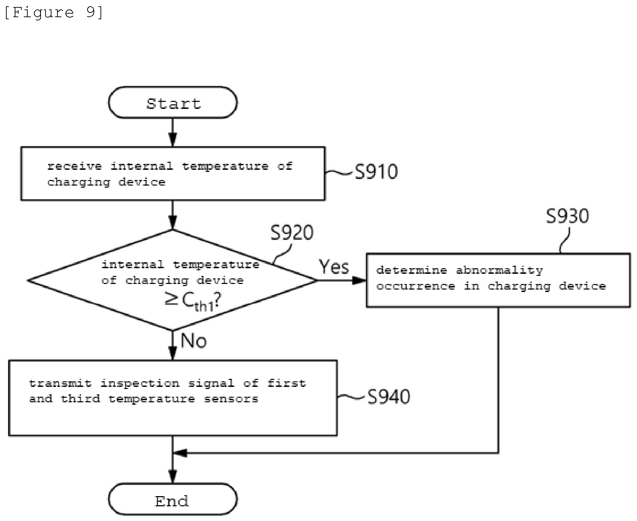

According to one embodiment, if the external temperature of the device D is equal to or higher than the external temperature set value Dₜₕ₁ (Yes in S840), the processor 620 may diagnose whether an abnormality occurred in the charging device C (S841). The method of diagnosing whether an abnormality occurs in the charging device C will be described in more detail in FIG. 9 below.

In addition, according to another embodiment, if the external temperature of the device D is lower than the external temperature set value Dₜₕ₁(No in S840), the processor 620 may determine that the battery 310 is normal (S850). Accordingly, the processor 620 may continuously monitor the temperature of the battery 310 and the external temperature of the device D without a control signal of the charge current.

FIG. 9 is a flowchart for explaining a step of determining whether an abnormality occurs in a charging device in a battery charge control method according to an embodiment of the present invention.

Referring to FIG. 9, the processor 620 may diagnose whether an abnormality occurs in the charging device C, as in step S841 of FIG. 8.

More specifically, the processor 620 may receive an internal temperature of the charging device C measured from a third temperature sensor 430 (S910). Here, the third temperature sensor 430 may be a device located inside the charging device C and measure real-time internal temperatures of the charging device C.

If the internal temperature of the charging device C measured by the third temperature sensor 430 is equal to or higher than the internal temperature set value Cₜₕ₁ (S920), the processor 620 may determine that an abnormality has occurred in the charging device C (S930). For example, the internal temperature set value Cₜₕ₁ may be a value predetermined by the supplier.

Meanwhile, if the internal temperature of the charging device C is lower than the internal temperature set value Cₜₕ₁ (S920), the processor 620 may transmit an inspection signal of the first temperature sensor 330 in the battery system S to a user terminal or the device D, or may transmit an inspection signal of the third temperature sensor 430 of the charging device C to a user terminal, a supplier terminal, or an output unit 450 (S940). Accordingly, the first temperature sensor 330 and the third temperature sensors 330 may be induced to be inspected by a user.

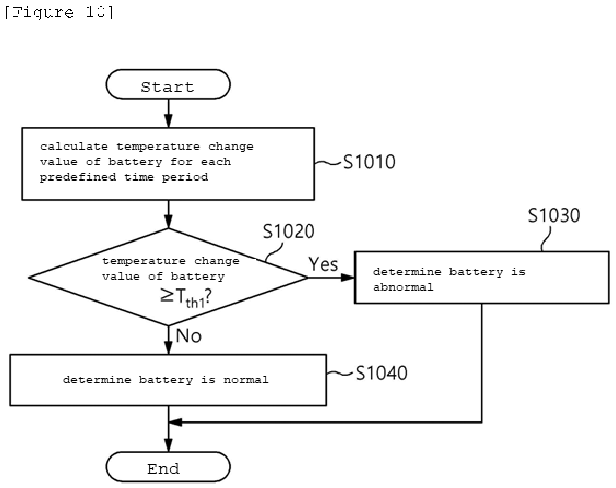

FIG. 10 is a flowchart of a battery charge control method according to another embodiment of the present invention.

Referring to FIG. 10, the processor 620 of the battery charge control apparatus 600 may receive the temperature of the battery 310 measured by the first temperature sensor 330 at each predefined time period and calculate a temperature change value of the battery 310 (S1010). For example, the processor 620 may calculate the temperature change value of the battery 310 by subtracting the temperature of the battery 310 received in the previous period from the temperature of the battery 310 received in the current period.

According to an embodiment, the processor 620 may determine that an abnormality has occurred in the battery if the temperature change value of the battery 310 is equal to or higher than a predetermined first temperature change set value Tₜₕ₁ (Yes in S1020) (S1030). Accordingly, the processor 620 may transmit a charge current supply cutoff signal to the battery management device 320 or the charging device C to cut off the charge current supplied to the battery 310. For example, the first temperature change set value Tₜₕ₁ may be a predetermined value based on a C-rate of the battery 310. According to an embodiment, the first temperature change set value Tₜₕ₁ may be provided in advance by being stored in the storage device 660.

According to another embodiment, the processor 620 may determine that the battery is normal (S1040) when the temperature change value of the battery 310 is less than the predetermined first temperature change set value Tₜₕ₁ (No of S1020). Accordingly, the processor 620 may continuously monitor the temperature change value of the battery 310 at predetermined intervals.

Meanwhile, without being limited to the disclosed, the processor 620 may determine that an abnormality has occurred in the battery 310 even if the temperature change value of the battery 310 is continuously maintained above a second temperature change set value Tₜₕ₂ for a predetermined time. For example, the predetermined time may be 5 seconds, and the second temperature change set value Tₜₕ₂ may be a value predetermined based on a C-rate of the battery 310 and may be the same as or different from the first temperature change set value Tₜₕ₁. According to an embodiment, the second temperature change set value Tₜₕ₂ may be provided in advance by being stored in the storage device 660. Accordingly, the processor 620 may transmit a charge current supply cutoff signal to the battery management device 320 or the charging device C, thereby cutting off the charge current supplied to the battery 310.

In the above, the battery charge control apparatus and method, the battery system including the apparatus, and a charging device according to embodiments of the present invention have been described.

The battery charge control apparatus and method, the battery system including the apparatus, and a charging device according to embodiments of the present invention acquire a temperature of the battery and a temperature of a device measured during a charging process of the battery, and determine whether an abnormality has occurred in the battery based on this and control the charge current supplied to the battery, thereby preventing occurrence of a battery fire in advance.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that may be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery charge control apparatus comprising:
at least one processor; and
a memory configured to store at least one instruction executed by the at least one processor,
wherein the at least one instruction includes:
an instruction to obtain temperature information of a battery system; and
an instruction to control a charge current of a battery in the battery system based on the temperature information of the battery system when charging the battery by a charging device.

2. The battery charge control apparatus of claim 1, wherein the temperature information of the battery system is obtained from at least one of:
a first temperature sensor configured to measure a temperature of the battery; and
a second temperature sensor located at an outer side of the charging device and configured to measure an external temperature of a device to which the battery is applied.

3. The battery charge control apparatus of claim 2, wherein the second temperature sensor includes a thermal imaging camera installed on an outer side of the charging device.

4. The battery charge control apparatus of claim 2, wherein the instruction to control the charge current includes:
an instruction to determine that an abnormality has occurred in the battery when the temperature of the battery is equal to or higher than a first battery temperature set value or when an external temperature of the device to which the battery is applied is equal to or higher than an external temperature set value; and
an instruction to cut off the charge current supplied to the battery when it is determined that an abnormality has occurred in the battery.

5. The battery charge control apparatus of claim 2, wherein the instruction to control the charge current includes:
an instruction to determine that a sign of abnormality has occurred in the battery when the temperature of the battery is equal to or higher than a second battery temperature set value which is lower than a first battery temperature set value and the external temperature of the device to which the battery is applied is lower than an external temperature set value; and
an instruction to adjust downward the size of the charge current supplied to the battery when a sign of abnormality has occurred in the battery.

6. The battery charge control apparatus of claim 2, wherein the instruction to control the charge current includes:
an instruction to identify a charging method of the battery when the temperature of the battery is equal to or higher than a second battery temperature set value, which is lower than a first battery temperature set value and the external temperature of the device to which the battery is applied is lower than an external temperature set value; and
an instruction to change the charging method of the battery from a constant current charging method to a constant voltage charging method when the charging method of the battery is constant current charging, and to charge the battery.

7. The battery charge control apparatus of claim 2, wherein the instruction to control the charge current includes:
an instruction to determine that an abnormality has occurred in the battery when a temperature change value of the battery calculated for each predetermined time period is equal to or higher than a first temperature change set value; and
an instruction to cut off the charge current supplied to the battery when it is determined that an abnormality has occurred in the battery.

8. The battery charge control apparatus of claim 2, wherein the instruction to control the charge current includes:
an instruction to determine that an abnormality has occurred in the battery when a temperature change value of the battery is continuously maintained above a second temperature change set value for a predetermined time; and
an instruction to cut off the charge current supplied to the battery when it is determined that an abnormality has occurred in the battery.

9. The battery charge control apparatus of claim 2, wherein the instruction to control the charge current includes:
an instruction to determine that an abnormality has occurred in the charging device when the temperature of the battery is below a second battery temperature set value and the external temperature of the device to which the battery is applied is above the external temperature set value.

10. The battery charge control apparatus of claim 9, wherein the instruction to determine that an abnormality has occurred in the charging device includes:
an instruction to receive an internal temperature of the charging device measured from a third temperature sensor located inside the charging device; and
an instruction to determine that an abnormality has occurred in the charging device if the internal temperature of the charging device is equal to or higher than an internal temperature set value.

11. The battery charge control apparatus of claim 1,further comprising:
an instruction to transmit a diagnosis result of the battery generated based on temperature information of the battery system to at least one of the device to which the battery is applied and a user terminal for the device to which the battery is applied.

12. A charge control method of a battery charge control apparatus, the battery charge control method comprising: obtaining temperature information of a battery system; and
controlling a charge current of a battery in the battery system based on the temperature information of the battery system when charging the battery by a charging device.

13. The battery charge control method of claim 12, wherein the obtaining temperature information of the battery system includes:
receiving a temperature of the battery from a first temperature sensor; and
receiving an external temperature of a device to which the battery is applied from a second temperature sensor located at an outer side of the charging device.

14. The battery charge control method of claim 13, wherein the second temperature sensor includes a thermal imaging camera installed on an outer side of the charging device.

15. The battery charge control method of claim 13, wherein the controlling the charge current of the battery includes:
determining that an abnormality has occurred in the battery when the temperature of the battery is equal to or higher than a first battery temperature set value or when an external temperature of the device to which the battery is applied is equal to or higher than an external temperature set value; and
cutting off the charge current supplied to the battery when it is determined that an abnormality has occurred in the battery.

16. The battery charge control method of claim 13, wherein the controlling the charge current of the battery includes:
determining that a sign of abnormality has occurred in the battery when the temperature of the battery is equal to or higher than a second battery temperature set value which is lower than a first battery temperature set value and the external temperature of the device to which the battery is applied is lower than an external temperature set value; and
adjusting downward the size of the charge current supplied to the battery when a sign of abnormality has occurred in the battery.

17. The battery charge control method of claim 13, wherein the controlling the charge current of the battery includes:
identifying a charging method of the battery when the temperature of the battery is equal to or higher than a second battery temperature set value, which is lower than a first battery temperature set value and the external temperature of the device to which the battery is applied is lower than an external temperature set value; and
changing the charging method of the battery from a constant current charging method to a constant voltage charging method when the charging method of the battery is constant current charging, and to charge the battery.

18. The battery charge control method of claim 13, wherein the controlling the charge current of the battery includes:
determining that an abnormality has occurred in the battery when a temperature change value of the battery calculated for each predetermined time period is equal to or higher than a first temperature change set value; and
cutting off the charge current supplied to the battery when it is determined that an abnormality has occurred in the battery.

19. The battery charge control method of claim 13, wherein the controlling the charge current of the battery includes:
determining that an abnormality has occurred in the battery when a temperature change value of the battery is continuously maintained above a second temperature change set value for a predetermined time; and
cutting off the charge current supplied to the battery when it is determined that an abnormality has occurred in the battery.

20. The battery charge control method of claim 13, wherein the controlling the charge current of the battery includes:
determining that an abnormality has occurred in the charging device when the temperature of the battery is below a second battery temperature set value and the external temperature of the device to which the battery is applied is above the external temperature set value.

21. The battery charge control method of claim 20, wherein the determining that an abnormality has occurred in the charging device includes:
receive an internal temperature of the charging device measured from a third temperature sensor located inside the charging device; and
determining that an abnormality has occurred in the charging device if the internal temperature of the charging device is equal to or higher than an internal temperature set value.

22. The battery charge control method of claim 12, further comprising:
transmitting a diagnosis result of the battery generated based on temperature information of the battery system to at least one of the device to which the battery is applied and a user terminal for the device to which the battery is applied.

23. A battery system comprising:
a battery;
a battery management device for managing the battery; and
a first temperature sensor configured to measure a temperature of the battery,
wherein the battery management device is configured to, when charging the battery by a charging device, receive temperature information from a second temperature sensor located in at an outer side of the charging device and to control a charge current of the battery based on temperature information received from at least one of the first temperature sensor and the second temperature sensor.

24. The battery system of claim 23, wherein the second temperature sensor measures external temperature of a device to which the battery is applied.

25. A charging device comprising:
a battery charge control unit for controlling battery charging; and
a temperature sensor configured to measure an external temperature of a device to which a battery is applied during battery charging,
wherein the battery charge control unit is configured to, when charging the battery by the charging device, receive temperature information from a battery management device and to control a charge current of the battery based on temperature information received from at least one of the temperature sensor and the battery management device.

26. The charging device of claim 25, wherein the temperature sensor includes a thermal imaging camera installed on an outer side of the charging device.
